# FASCICULE DE BREVET EUROPEEN

(11) **EP 3 170 220 B1**
(45) Date de publication et mention de la délivrance du brevet: **27.06.2018**
(21) Numéro de dépôt: 15744275.7
(22) Date de dépôt: 16.07.2015
(51) Int. Cl.: H01M 8/0206, H01M 8/0213, H01M 8/021, H01M 8/0221, H01M 8/0226, H01M 8/0258, H01M 8/026, H01M 8/0267, H01M 8/0297, H01M 8/241

(54) **PLAQUE BIPOLAIRE POUR RÉACTEUR ÉLECTROCHIMIQUE A ZONE D'HOMOGÉNÉISATION COMPACTE ET A FAIBLE DIFFÉRENTIEL DE PRESSION**
BIPOLARE PLATTE FÜR ELEKTROCHEMISCHEN REAKTOR MIT KOMPAKTEM HOMOGENISIERUNGSBEREICH UND GERINGER DRUCKDIFFERENZ
BIPOLAR PLATE FOR AN ELECTROCHEMICAL REACTOR WITH A COMPACT HOMOGENISATION ZONE AND A LOW PRESSURE DIFFERENTIAL

(30) Priorité: 17.07.2014 FR 1456917
(43) Date de publication de la demande: 24.05.2017
(73) Titulaire: Commissariat à l'Energie Atomique et aux Energies Alternatives, 75015 Paris (FR)
(72) Inventeur: POIROT-CROUVEZIER, Jean-Philippe, 38450 Saint Georges de Commiers (FR)
(74) Mandataire: GIE Innovation Competence Group
(86) Numéro de dépôt international: PCT/FR2015/051956
(87) Numéro de publication internationale: WO 2016/009154

(56) Documents cités:
- WO-A1-2006/064661
- DE-A1-102004 058 117
- JP-A- 2006 012 466
- US-A1- 2003 129 473
- US-A1- 2010 239 931

## Description

L'invention concerne les réacteurs électrochimiques incluant un empilement de cellules électrochimiques, et plus particulièrement des plaques bipolaires d'un empilement avec des membranes échangeuses de protons. De tels réacteurs électrochimiques constituent par exemple des piles à combustible ou des électrolyseurs.

Les piles à combustible sont notamment envisagées comme source d'énergie pour des véhicules automobiles produits à grande échelle dans le futur ou comme sources d'énergie auxiliaire dans l'aéronautique. Une pile à combustible est un dispositif électrochimique qui convertit de l'énergie chimique directement en énergie électrique. Une pile à combustible comprend un empilement en série de plusieurs cellules. Chaque cellule génère typiquement une tension de l'ordre de 1 Volt, et leur empilement permet de générer une tension d'alimentation d'un niveau plus élevé, par exemple de l'ordre d'une centaine de volts.

Parmi les types de piles à combustible connus, on peut notamment citer la pile à combustible à membrane d'échange de protons, dite PEM, fonctionnant à basse température. De telles piles à combustible présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, du dihydrogène utilisé comme carburant est ionisé pour produire des protons traversant la membrane. La membrane forme ainsi un conducteur ionique. Les électrons produits par cette réaction migrent vers une plaque d'écoulement, puis traversent un circuit électrique externe à la cellule pour former un courant électrique. Au niveau de la cathode, de l'oxygène est réduit et réagit avec les protons pour former de l'eau.

La pile à combustible peut comprendre plusieurs plaques dites bipolaires, par exemple en métal, empilées les unes sur les autres. La membrane est disposée entre deux plaques bipolaires. Les plaques bipolaires peuvent comprendre des canaux et orifices d'écoulement pour guider en continu les réactifs et les produits vers/depuis la membrane. Les plaques bipolaires comprennent aussi des canaux d'écoulement pour guider du liquide de refroidissement évacuant la chaleur produite. Les produits de réactions et les espèces non réactives sont évacués par entraînement par l'écoulement jusqu'à la sortie des réseaux de canaux d'écoulement. Les canaux d'écoulement des différents écoulements sont séparés par l'intermédiaire des plaques bipolaires notamment.

Les plaques bipolaires sont également électriquement conductrices pour collecter des électrons générés au niveau de l'anode. Les plaques bipolaires ont également une fonction mécanique de transmission des efforts de serrage de l'empilement, nécessaire à la qualité du contact électrique. Des couches de diffusion gazeuse sont interposées entre les électrodes et les plaques bipolaires et sont en contact avec les plaques bipolaires.

Une conduction électronique est réalisée à travers les plaques bipolaires, une conduction ionique étant obtenue à travers la membrane.

On distingue principalement trois modes de circulation des réactifs dans les canaux d'écoulement:
- les canaux en serpentin: un ou plusieurs canaux parcourent l'ensemble de la surface active en plusieurs allers-retours.
- les canaux parallèles: un faisceau de canaux parallèles et traversants parcourent la surface active de part en part. Les canaux d'écoulement peuvent être rectilignes ou légèrement ondulés.
- les canaux interdigités: un faisceau de canaux parallèles et bouchés parcourt la surface active de part en part. Chaque canal est bouché soit du côté de l'entrée, soit du côté de la sortie de fluide. Le fluide entrant dans un canal est alors contraint à traverser localement la couche de diffusion gazeuse pour rejoindre un canal adjacent et ensuite atteindre la sortie de fluide de ce canal adjacent.

Pour favoriser la compacité et les performances, la conception implique de réduire les dimensions des canaux d'écoulement. Le mode de circulation par canaux parallèles est alors généralement favorisé, pour limiter les pertes de charge dans de tels canaux d'écoulement de dimensions réduites, et éviter des problèmes d'écoulement de liquide de refroidissement pouvant conduire à des points chauds.

Avec des canaux d'écoulement parallèles, la distribution des réactifs aux électrodes doit être la plus homogène possible sur toute leur surface, sous peine d'altérer le fonctionnement du réacteur électrochimique. A cet effet, les plaques bipolaires comportant des canaux d'écoulement parallèles utilisent fréquemment des zones d'homogénéisation pour raccorder des collecteurs d'entrée et de sortie aux différents canaux d'écoulement des plaques bipolaires. Les réactifs sont amenés au contact des électrodes à partir de collecteurs d'entrée et les produits sont évacués à partir de collecteurs de sortie connectés aux différents canaux d'écoulement. Les collecteurs d'entrée et les collecteurs de sortie traversent généralement l'épaisseur de l'empilement de part en part. Les collecteurs d'entrée et de sortie sont usuellement obtenus par :
- des orifices respectifs traversant chaque plaque bipolaire à sa périphérie ;
- des orifices respectifs traversant chaque membrane à sa périphérie ;
- par des joints, chacun interposé entre une plaque bipolaire et une membrane. Chaque joint entoure un orifice de sa membrane et un orifice de sa plaque bipolaire. La surface de contact avec une membrane est généralement plane pour bien maintenir cette membrane souple.

Différentes solutions techniques sont connues pour mettre en communication les collecteurs d'entrée et de sortie avec les différents canaux d'écoulement. Il est notamment connu de réaliser des passages entre deux tôles métalliques d'une plaque bipolaire. Ces passages débouchent d'une part dans des orifices de collecteurs respectifs, et d'autre part dans des orifices d'injection. Une zone d'homogénéisation comprend des canaux qui mettent en communication des orifices d'injection avec des canaux d'écoulement.

La zone d'homogénéisation comprend : une zone de transfert de fluide de refroidissement, une zone d'homogénéisation de circuit de comburant et une zone d'homogénéisation de circuit de carburant superposées et débouchant respectivement vers un collecteur de liquide de refroidissement, un collecteur de circuit de comburant et un collecteur de circuit de carburant. Ces trois collecteurs étant nécessairement décalés pour être isolés les uns des autres, les canaux d'homogénéisation des circuits de carburant et de comburant présentent des orientations très différentes.

La zone d'homogénéisation ne participant que rarement à la réaction électrochimique, sa dimension doit être limitée autant que possible pour ne pas altérer la compacité et le poids de la pile à combustible. Par conséquent, il est fréquent que la zone d'homogénéisation présente des canaux présentant une déviation angulaire importante par rapport aux canaux d'écoulement de la zone réactive des électrodes, afin de gagner en compacité. Cependant, de tels canaux d'homogénéisation induisent des pertes de charge très disparates. Les pressions à l'entrée ou à la sortie de canaux d'écoulement opposés peuvent ainsi présenter d'importantes variations, au détriment du fonctionnement du réacteur électrochimique. Pour obtenir des zones d'homogénéisation compactes, un canal d'homogénéisation communique avec deux ou trois canaux d'écoulement. Un plus grand nombre de canaux d'écoulement pour chaque canal d'homogénéisation accroît les pertes de charge ainsi que les disparités entre celles-ci.

Le document US2010/0239931 décrit une structure de pile à combustible. Une plaque bipolaire définit des zones d'homogénéisation en entrée et en sortie pour l'écoulement de l'oxygène comburant et de l'eau générée. Les zones d'homogénéisation d'entrée et de sortie sont reliées par des canaux d'écoulement d'une zone de réaction. Les zones d'homogénéisation comportent des canaux d'homogénéisation dans un exemple. Les canaux d'homogénéisation en sortie sont plus longs que les canaux d'homogénéisation en entrée. Dans cet exemple, des canaux d'homogénéisation se subdivisent avant leur jonction aux canaux d'écoulement.

On peut constater que les différents canaux d'homogénéisation ne présentent pas une même section transversale, les conditions de réaction étant alors hétérogènes suivant les chemins d'écoulement suivis. De plus, certaines parties des zones d'homogénéisation sont potentiellement sujettes à des bouchages par de l'eau accumulée.

L'invention vise à résoudre un ou plusieurs de ces inconvénients. L'invention porte ainsi sur une plaque bipolaire telle que définie dans les revendications annexées. L'invention porte également sur un réacteur électrochimique, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un exemple d'empilement d'assemblages membrane/électrodes et de plaques bipolaires pour une pile à combustible;
- la figure 2 est une vue en perspective éclatée de plaques bipolaires et d'un assemblage membrane/électrodes destinés à être empilés pour former des collecteurs d'écoulement à travers l'empilement ;
- la figure 3 est une vue partielle de dessus d'une face d'une plaque bipolaire selon un premier exemple de mise en oeuvre de l'invention ;
- la figure 4 est une vue en coupe d'un empilement incluant des plaques bipolaires selon l'invention ;
- la figure 5 est un diagramme illustrant les pressions d'entrée au niveau de différents canaux d'écoulement selon différentes configurations ;
- les figures 6 à 8 sont des vues de dessus de différentes tôles de plaques bipolaires utilisant des conceptions différentes de zones d'homogénéisation ;
- la figure 9 est une vue partielle de dessus d'une face d'une plaque bipolaire selon un deuxième exemple de mise en oeuvre de l'invention ;
- la figure 10 est une vue partielle de dessus d'une tôle de plaque bipolaire utilisant une autre variante de conception de zone d'homogénéisation.

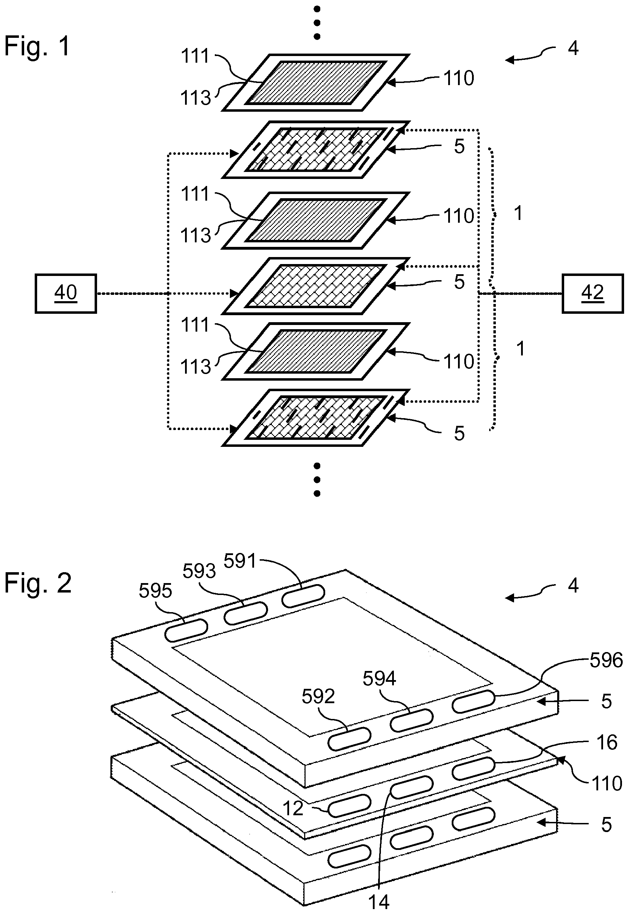

La figure 1 est une vue en perspective éclatée schématique d'un empilement de cellules 1 d'une pile à combustible 4. La pile à combustible 4 comprend plusieurs cellules 1 superposées. Les cellules 1 sont du type à membrane échangeuse de protons ou membrane à électrolyte polymère.

La pile à combustible 4 comprend une source de carburant 40. La source de carburant 40 alimente ici en dihydrogène une entrée de chaque cellule 1. La pile à combustible 4 comprend également une source de comburant 42. La source de comburant 42 alimente ici en air une entrée de chaque cellule 1, l'oxygène de l'air étant utilisé comme oxydant. Chaque cellule 1 comprend également des canaux d'échappement. Une ou plusieurs cellules 1 présentent également un circuit de refroidissement.

Chaque cellule 1 comprend un assemblage membrane/électrodes 110 ou AME 110. Un assemblage membrane/électrodes 110 comprend un électrolyte 113, une cathode (non illustrée) et une anode 111 placées de part et d'autre de l'électrolyte et fixées sur cet électrolyte 113. La couche d'électrolyte 113 forme une membrane semi-perméable permettant une conduction protonique tout en étant imperméable aux gaz présents dans la cellule. La couche d'électrolyte empêche également un passage des électrons entre l'anode 111 et la cathode.

Entre chaque couple d'AME adjacents, une plaque bipolaire 5 est disposée. Chaque plaque bipolaire 5 définit des canaux d'écoulement anodiques et des canaux d'écoulement cathodiques sur des faces externes opposées. Des plaques bipolaires 5 définissent avantageusement également des canaux d'écoulement de liquide de refroidissement entre deux assemblages membrane/électrodes successifs. Les plaques bipolaires 5 peuvent être formées chacune de façon connue en soi à partir deux tôles métalliques conductrices assemblées, par exemple en acier inoxydable, ou en alliage de titane, en alliage d'aluminium, en alliage de nickel ou en alliage de tantale. Chaque tôle définit alors une face externe respective. Les plaques bipolaires 5 peuvent également être obtenues par tout autre procédé, par exemple le moulage ou l'injection à partir de composites carbone-polymère. Les plaques bipolaires 5 peuvent ainsi également être formées d'un seul tenant. Les faces externes de la plaque bipolaire 5 sont alors définies par une telle pièce d'un seul tenant.

L'empilement peut également comprendre des joints d'étanchéité périphériques et des renforts de membrane non illustrés ici. Chaque cellule 1 peut en outre comprendre une couche de diffusion de gaz (non illustrée) disposée entre l'anode et une plaque bipolaire, et une autre couche de diffusion de gaz disposée entre la cathode et une autre plaque bipolaire.

De façon connue en soi, durant le fonctionnement de la pile à combustible 4, de l'air s'écoule entre une AME et une plaque bipolaire, et du dihydrogène s'écoule entre cette AME et une autre plaque bipolaire. Au niveau de l'anode, le dihydrogène est ionisé pour produire des protons qui traversent l'AME. Les électrons produits par cette réaction sont collectés par une plaque bipolaire 5. Les électrons produits sont ensuite appliqués sur une charge électrique connectée à la pile à combustible 1 pour former un courant électrique. Au niveau de la cathode, de l'oxygène est réduit et réagit avec les protons pour former de l'eau. Les réactions au niveau de l'anode et de la cathode sont régies comme suit :

H₂ → 2H⁺ + 2e⁻

au niveau de l'anode ;

4H⁺ + 4e⁻ + O₂ → 2H₂O

au niveau de la cathode.

Durant son fonctionnement, une cellule de la pile à combustible génère usuellement une tension continue entre l'anode et la cathode de l'ordre de 1V.

La figure 2 est une vue en perspective éclatée schématique de deux plaques bipolaires 5 et d'un assemblage membrane/électrodes destinés à être inclus dans l'empilement de la pile à combustible 4. L'empilement des plaques bipolaires 5 et des assemblages membrane/électrodes 110 est destiné à former une pluralité de collecteurs d'écoulement, dont la disposition est illustrée ici uniquement de manière schématique. À cet effet, des orifices respectifs sont ménagés à travers les plaques bipolaires 5 et à travers les assemblages membrane/électrodes 110. Les plaques bipolaires 5 comportent ainsi des orifices 591, 593 et 595 au niveau d'une première extrémité, et des orifices 592, 594 et 596 au niveau d'une deuxième extrémité opposée à la première. L'orifice 591 sert par exemple pour former un collecteur d'alimentation en carburant, l'orifice 596 sert par exemple pour former un collecteur d'évacuation de résidus de combustion et de carburant non utilisé, l'orifice 593 sert par exemple pour former un collecteur d'alimentation en liquide de refroidissement, l'orifice 594 sert par exemple pour former un collecteur d'évacuation de liquide de refroidissement, l'orifice 592 sert par exemple pour former un collecteur d'alimentation en comburant, et l'orifice 595 sert par exemple pour former un collecteur d'évacuation d'eau produite et de comburant non utilisé.

Les orifices des plaques bipolaires 5 et des assemblages membrane/électrodes 110 sont disposés en vis-à-vis afin de former les différents collecteurs d'écoulement. Des orifices 12, 14 et 16 sont par exemple ménagés dans les assemblages membrane/électrodes 110 et sont disposés en vis-à-vis respectivement des orifices 592, 594 et 596. Dans un but de simplification, l'orifice 596 sera assimilé à un collecteur d'évacuation de résidus de combustion de l'empilement.

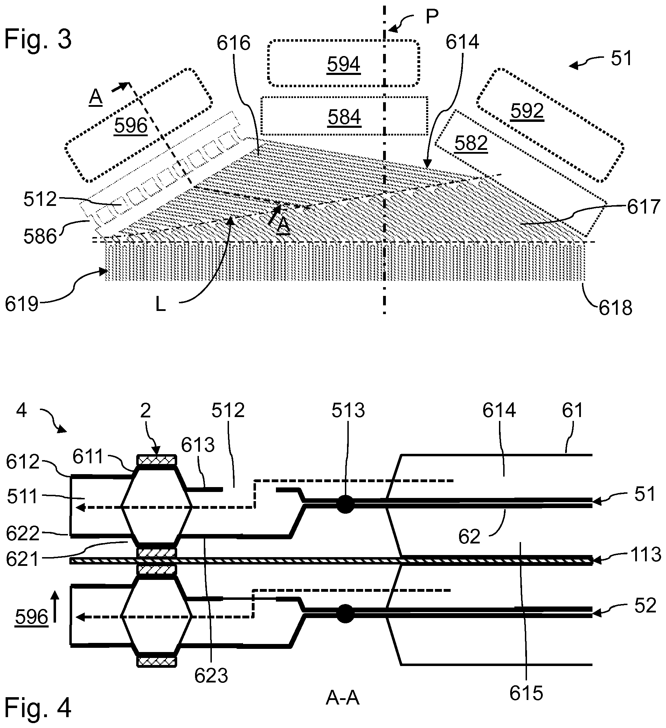

La figure 3 est une vue schématique partielle de dessus d'une tôle 61 d'un exemple de mise en oeuvre d'une plaque bipolaire 5 selon l'invention, au niveau des collecteurs 592, 594 et 596. La figure 4 est une vue en coupe d'une telle plaque bipolaire 51, empilée avec une autre plaque bipolaire identique 52, et entre lesquelles une membrane 113 d'un assemblage membrane/électrodes est disposée. La coupe est ici illustrée au niveau du collecteur 596 d'évacuation des résidus de combustion.

Chacune des plaques bipolaires 5, 51 et 52 illustrées inclut deux tôles conductrices 61 et 62 solidarisées. Les tôles conductrices 61 et 62 sont avantageusement réalisées en acier inoxydable, matériau très courant et adapté à de nombreux procédés de transformation industriels largement répandus, par exemple l'emboutissage, l'estampage et/ou le poinçonnage. Les tôles conductrices 61 et 62 illustrées à la figure 4 sont solidarisées par l'intermédiaire de soudures 513. Les tôles conductrices 61 et 62 sont en relief, de façon à ménager des canaux d'écoulement de fluide au niveau des faces externes de chaque plaque bipolaire, et avantageusement entre les tôles conductrices 61 et 62 à l'intérieur de chacune de ces plaques bipolaires. Ainsi, pour chaque plaque bipolaire, des canaux d'écoulement de liquide de refroidissement (non illustrés) sont ménagés entre les tôles conductrices 61 et 62, des canaux d'écoulement de carburant 618 sont ménagés sur une face externe de la tôle 61, et des canaux d'écoulement (non illustrés) de comburant et d'eau sont ménagés sur une face externe de la tôle 62. Les canaux d'écoulement 618 sont ici de type parallèle et s'étendent selon une même direction. Les canaux d'écoulement de comburant et de liquide de refroidissement sont également avantageusement de type parallèle et s'étendent selon une même direction. Ces différents canaux d'écoulement ne sont pas nécessairement rectilignes (ces canaux peuvent présenter une ondulation), leur direction étant définie par une droite reliant leur entrée à leur sortie.

De façon connue en soi, les différents collecteurs traversant l'empilement communiquent avec des zones d'injection respectives. Dans l'exemple illustré à la figure 3, le collecteur 596 communique avec une zone d'injection 586, le collecteur 594 communique avec une zone d'injection 584 et le collecteur 592 communique avec une zone d'injection 582. Chaque zone d'injection comporte des orifices d'injection respectifs en communication avec des canaux d'écoulement respectifs. Les zones d'injection 586, 584 et 582 sont décalées latéralement. Les zones d'injection 582 et 586, comprenant des orifices d'injection respectifs, sont notamment disposées de part et d'autre d'un plan P perpendiculaire à leur plaque bipolaire et incluant la direction des canaux d'écoulement 618, de façon à pouvoir loger plusieurs collecteurs au niveau d'une même extrémité d'une plaque bipolaire.

Des orifices d'injection 512 sont ménagés dans la tôle 61 dans la zone d'injection 586. Comme illustré à la figure 4, des orifices 512 communiquent avec le collecteur 596 par l'intermédiaire d'un passage 511 :
- traversant des nervures 612 et 622 ;
- traversant des nervures 611 et 621 de support de joints 2, les nervures 611 et 621 entourant le collecteur 596 ; et
- traversant des nervures 613 et 623.

Les nervures 612 et 613 sont ménagées de part et d'autre de la nervure 611 dans la tôle 61, les nervures 622 et 623 étant ménagées de part et d'autre de la nervure 621 dans la tôle 62.

Des communications de fluide non détaillées et non illustrées sont également ménagées d'une part entre le collecteur 594 et la zone d'injection 584, et d'autre part entre le collecteur 592 et la zone d'injection 582.

Les orifices d'injection 512 de la zone d'injection 586 communiquent avec les canaux d'écoulement 618 par l'intermédiaire d'une zone d'homogénéisation 614 également ménagée sur la face externe de la tôle 61. Une zone d'homogénéisation se différencie généralement d'une zone réactive 619 incluant les canaux d'écoulement 618 :
- par l'absence d'électrode surplombant cette zone de modélisation dans l'assemblage membrane-électrodes ; et/ou
- par la présence de canaux d'homogénéisation présentant une inclinaison par rapport aux canaux d'écoulement 618, de façon à rendre la zone d'homogénéisation 614 plus compacte.

La fonction des zones d'homogénéisation 614 est notamment de limiter les différences de débits entre les différents canaux d'écoulement 618 et d'homogénéiser les pertes de charges pour les différents chemins d'écoulement possibles.

Avantageusement, une zone d'homogénéisation est ménagée dans la face externe définie par la tôle 62, pour mettre en communication des orifices d'injection de la zone d'injection 582 avec des canaux d'écoulement de cette face externe. Avantageusement, cette zone d'homogénéisation est positionnée en superposition avec la zone d'homogénéisation 614.

La zone d'homogénéisation 614 comprend des canaux d'homogénéisation séparés les uns des autres par des parois latérales. Chaque canal d'homogénéisation met en communication au moins un orifice 512 avec plusieurs canaux d'écoulement 618. L'alimentation de plusieurs canaux d'écoulement 618 par un même canal d'homogénéisation permet de façon générale d'augmenter la compacité de la zone d'homogénéisation 614. Afin d'obtenir un tel résultat sans altérer excessivement les différences de débit entre canaux d'écoulement les plus éloignés, et sans induire de trop grands gradients de pression à l'entrée de canaux d'écoulement, l'invention propose de subdiviser des canaux d'homogénéisation en plusieurs branches, en partant d'un orifice d'injection 512 jusqu'à un canal d'écoulement 618.

Dans l'exemple illustré, la zone d'homogénéisation 614 est scindée en une zone d'homogénéisation 616 et une zone d'homogénéisation 617. La zone d'homogénéisation 616 forme un premier tronçon et comporte des canaux d'homogénéisation dans lesquels débouchent les orifices d'injection 512. La zone d'homogénéisation 617 forme un deuxième tronçon comportant des branches débouchant dans des canaux d'écoulement 618.

Avantageusement, chaque branche de la zone 617 débouche dans un unique canal de la zone 616. Ainsi, une éventuelle accumulation d'eau dans la zone 616 est plus facilement évacuée car :
- l'écoulement dans les canaux d'écoulement 618 en aval de cet éventuel canal bouché doit nécessairement passer par ce canal bouché, ce qui garantit une pression de débouchage appliquée sur l'éventuelle accumulation d'eau ;
- l'homogénéité de perte de charge entre les différents chemins d'écoulement garantit une pression suffisante sur l'éventuelle accumulation d'eau pour favoriser le débouchage.

De même, une éventuelle accumulation d'eau dans la zone 617 est plus facilement évacuée car le canal de la zone 616 dans lequel débouchent les branches de la zone 617 applique une pression homogène sur ces branches. Du fait de l'homogénéité de perte de charge des chemins d'écoulement passant par les différentes branches, on favorise une pression de débouchage sur une éventuelle accumulation d'eau.

La ligne L illustrée permet de situer les embranchements entre les canaux d'homogénéisation de la zone 616 et leurs branches de la zone 617. Au niveau d'un embranchement, un canal d'homogénéisation se scinde ici en deux branches. Avantageusement, un canal d'homogénéisation se scinde au maximum en trois branches au niveau d'un embranchement, afin de ne pas accroître excessivement la perte de charge dans les canaux d'homogénéisation. Avantageusement chacun desdits embranchements est disposé dans son canal d'homogénéisation à une distance d'un orifice d'injection 512 comprise entre 0,3 * Lch et 0,7 * Lch, avec Lch la longueur du canal d'homogénéisation dans lequel est situé cet embranchement.

Dans l'exemple illustré, chaque branche de la zone 617 débouche avantageusement dans plusieurs canaux d'écoulement 618. Avantageusement, chaque branche de la zone 617 débouche dans au plus trois canaux d'écoulement 618, afin de ne pas accroître les pertes de charges dans la zone 616.

Comme les canaux d'homogénéisation de la zone 616 sont moins nombreux que leurs branches dans la zone 617, les canaux d'homogénéisation de la zone 616 peuvent présenter une inclinaison par rapport aux canaux d'écoulement 618 supérieure à celle de leurs branches. Une telle inclinaison accrue permet de limiter la dimension de la zone d'homogénéisation 614, et donc de limiter l'encombrement général de la plaque bipolaire et de l'empilement. Les branches de la zone 617 forment un angle d'au moins 20° par rapport aux canaux d'écoulement 618. Les canaux d'homogénéisation de la zone 616 forment un angle d'au moins 40° par rapport aux canaux d'écoulement 618, et un angle d'au moins 20° par rapport aux branches de la zone 617. Une inclinaison des canaux d'homogénéisation par rapport aux canaux d'écoulement permet d'autre part d'utiliser une même section transversale pour les canaux d'écoulement et les canaux d'homogénéisation, alors que ces derniers sont moins nombreux. De même, une inclinaison des canaux du premier tronçon par rapport aux branches du deuxième tronçon permet de ménager un premier tronçon avec des canaux ayant la même section transversale que les branches dans le deuxième tronçon. En utilisant de mêmes sections transversales, il est possible de définir aisément de mêmes conditions d'écoulement à travers tous les chemins d'écoulement, en particulier lorsque les canaux d'homogénéisation plus courts en entrée sont compensés par des canaux d'homogénéisation plus longs en sortie de canaux d'écoulement communs.

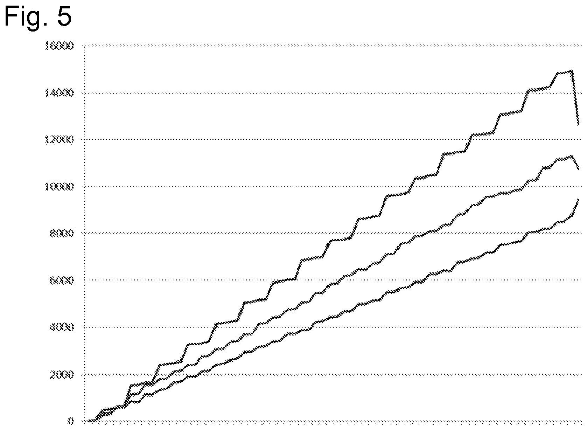

La figure 5 est un diagramme illustrant un différentiel de pression de sortie de canaux d'écoulement en fonction de leur position transversale. L'abscisse correspond à un indice de canal, l'ordonnée à une différence de pression en Pascal. La figure 5 illustre des résultats de simulation avec une zone d'homogénéisation selon l'état de la technique comportant des canaux d'homogénéisation sans embranchement alimentant quatre canaux d'écoulement (courbe du haut), avec une zone d'homogénéisation selon l'état de la technique comportant des canaux d'homogénéisation sans embranchement alimentant deux canaux d'écoulement (courbe du bas) et avec une zone d'homogénéisation 614 selon l'invention (courbe du milieu). On constate qu'une d'homogénéisation 614 selon l'invention (courbe du milieu). On constate qu'une zone d'homogénéisation 614 selon l'invention permet de maintenir une disparité de pressions dans les canaux d'écoulement 618 relativement réduite, tout en permettant de réduire sensiblement son encombrement.

Avantageusement, la section transversale de chacun des canaux d'homogénéisation dans la zone 616 est identique à la section transversale de chacun des canaux d'écoulement 618, ce qui permet d'obtenir une compacité maximale avec un angle d'inclinaison maximal entre les canaux d'homogénéisation de la zone 616 et les canaux d'écoulement 618. Une même section transversale entre les canaux d'homogénéisation de la zone 616 permet en outre d'obtenir une bonne maîtrise des conditions d'écoulement et une homogénéité des conditions d'écoulement comme détaillé auparavant. Avantageusement, la section transversale des canaux d'homogénéisation dans la zone ou tronçon 616 est égale à la section transversale des branches dans la zone ou tronçon 617, toujours pour favoriser la maîtrise des conditions d'écoulement et l'homogénéisation des conditions d'écoulement.

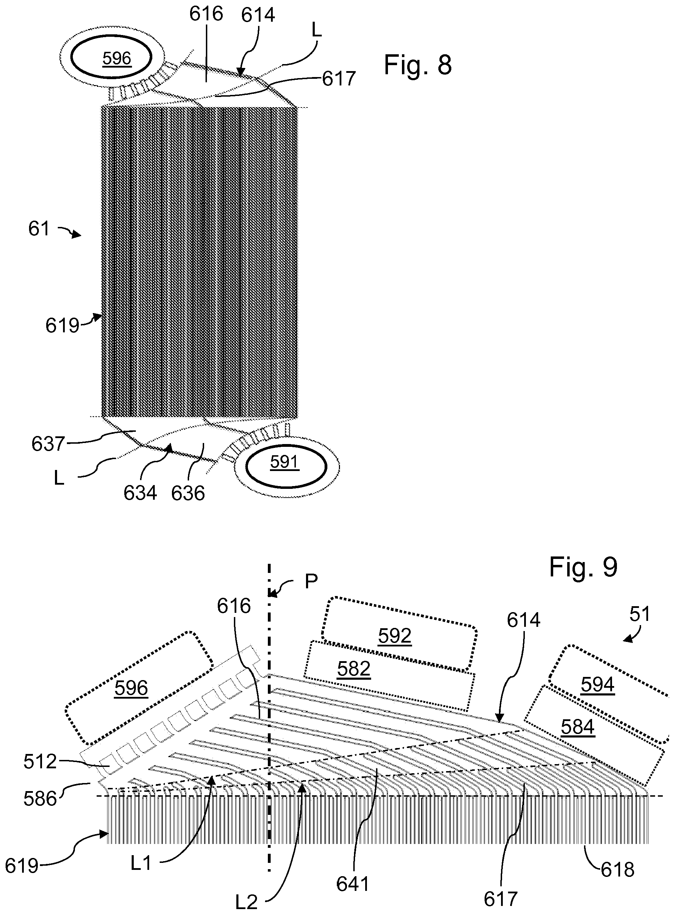

À l'aplomb de la zone d'homogénéisation 614, la plaque bipolaire peut comporter une zone d'homogénéisation pour les canaux d'écoulement de comburant et d'eau, cette zone d'homogénéisation pouvant présenter une forme symétrique de la zone d'homogénéisation 614 par rapport à une droite perpendiculaire à la plaque bipolaire et passant par son centre. Il est aussi possible de prévoir des zones d'homogénéisation non symétriques, pour tenir compte des différences de pertes de charges des différents écoulements. Par exemple, les canaux d'homogénéisation pour du carburant de type dihydrogène peuvent présenter une inclinaison supérieure aux canaux d'homogénéisation du comburant. Ainsi, les collecteurs 592 et 594 illustrés à la figure 3 peuvent être intervertis, comme illustré dans un exemple à la figure 9.

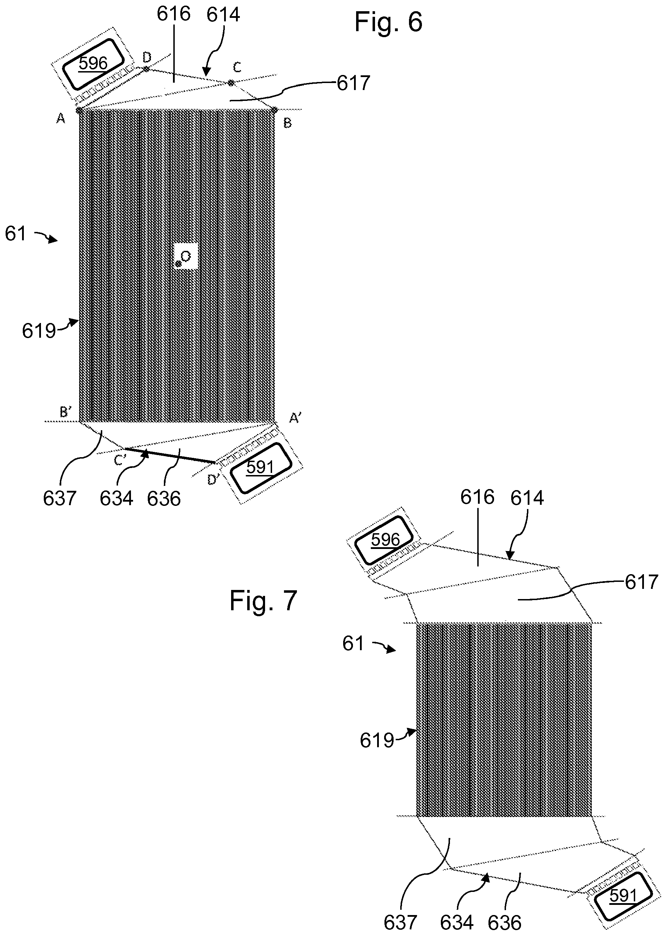

La figure 6 est une vue de dessus d'une variante de plaque bipolaire permettant d'équilibrer les pertes de charges dans les différents trajets d'écoulement passant par les canaux d'écoulement 618. Une zone d'homogénéisation 634 est formée à l'opposé de la zone d'homogénéisation 614 par rapport aux canaux d'écoulement 618 de la zone de réaction 619. La zone d'homogénéisation 634 présente une forme sensiblement symétrique de la zone 614 par rapport à un axe perpendiculaire à la plaque bipolaire. Un tel axe est identifié par le point O sur cette figure. Ainsi, un trajet d'écoulement passant par un quelconque canal d'écoulement 618 est identique au trajet d'écoulement passant par le canal positionné de façon symétrique par rapport à un plan médian parallèle au plan P. Avantageusement, la longueur de l'ensemble des trajets d'écoulement à travers la zone d'homogénéisation 614, les canaux d'écoulement 618 et la zone d'homogénéisation 634 est identique. Une telle homogénéité de conditions d'écoulement est encore renforcée par une même section transversale dans les différents canaux d'écoulement, canaux d'homogénéisation et branches des canaux d'homogénéisation.

Pour tenir compte de conditions d'écoulement légèrement différentes entre l'entrée et la sortie de trajets d'écoulement (augmentation de la quantité d'eau par exemple), la zone d'homogénéisation 614 peut présenter une géométrie différente de la zone d'homogénéisation 634, par exemple avec des angles différents des canaux d'homogénéisation dans ces deux zones d'homogénéisation. Du fait des angles entre les canaux et branches des zones d'homogénéisation et les canaux d'écoulement, certains canaux et branches d'homogénéisation sont plus courts que d'autres. Pour conserver une longueur très proche entre les trajets d'écoulement, aux extrémités d'un canal d'écoulement, plus le canal et la branche d'homogénéisation de la zone 614 débouchant dans ce canal d'écoulement est court, plus le canal et la branche d'homogénéisation de la zone 634 débouchant dans ce canal d'écoulement est long. En pratique, pour un canal d'écoulement 618 donné, le canal et la branche d'homogénéisation de la zone 614, et le canal et la branche d'homogénéisation de la zone 634 débouchant dans ce canal d'écoulement 618 sont positionnés de côtés opposés d'un plan perpendiculaire à la plaque bipolaire et s'étendant selon la direction de ce canal d'écoulement 618.

La figure 6 illustre un premier exemple de conception de la géométrie d'une zone d'homogénéisation 614 ou 634. Cette conception permet d'optimiser la compacité des zones d'homogénéisation. Dans cet exemple, une ligne A-B passe par les extrémités des canaux d'écoulement 618. Une ligne A-C est tracée, séquente à la ligne A-B au point A. Les embranchements sont ménagés le long de la ligne A-C. La zone d'homogénéisation 617 est donc positionnée entre les lignes A-B et A-C, et plus précisément délimitée par un triangle ABC. Dans cet exemple, une ligne A-D définit la jonction entre la zone d'injection 586 et la zone d'homogénéisation 616, cette ligne étant sécante à la ligne A-B au point A. La zone d'homogénéisation 616 est donc positionnée entre les lignes AD et A-C, et plus précisément délimitée par un triangle ADC. De façon similaire, la zone d'homogénéisation 634 est scindée en une zone d'homogénéisation 636 délimitée par un triangle A'B'C', et une zone d'homogénéisation 637 délimitée par un triangle A'D'C'. Les zones d'injection pour le liquide de refroidissement et pour le comburant peuvent être positionnées respectivement sur les segments BC et CD par exemple.

La figure 7 illustre un deuxième exemple de conception de la géométrie d'une zone d'homogénéisation 614 ou 634. Comme dans l'exemple précédent, la zone d'homogénéisation 634 présente une forme sensiblement symétrique de celle de la zone 614 par rapport à un axe perpendiculaire à la plaque bipolaire. Un tel axe est identifié par le point O sur la figure. Ainsi, un trajet d'écoulement passant par un quelconque canal d'écoulement 618 est identique au trajet d'écoulement passant par le canal positionné de façon symétrique par rapport à un plan médian de la plaque bipolaire parallèle au plan P. Les zones d'homogénéisation 616 et 617 sont ici délimitées par des quadrilatères. Les canaux d'homogénéisation de la zone homogénéisation 614 présentent alors des longueurs dont l'ordre de grandeur est relativement proche, de sorte que les pertes de charges de l'écoulement les traversant sont relativement proches.

La figure 8 illustre un troisième exemple de conception de la géométrie d'une zone d'homogénéisation 614 ou 634. Dans cet exemple, les embranchements entre les canaux d'homogénéisation de la zone 616 et les branches de la zone d'homogénéisation 617 sont positionnés sur une ligne courbe. Une telle configuration est par exemple destinée à s'adapter à des collecteurs 596 ou 591 de section circulaire ou ovale, comme illustré sur cette figure.

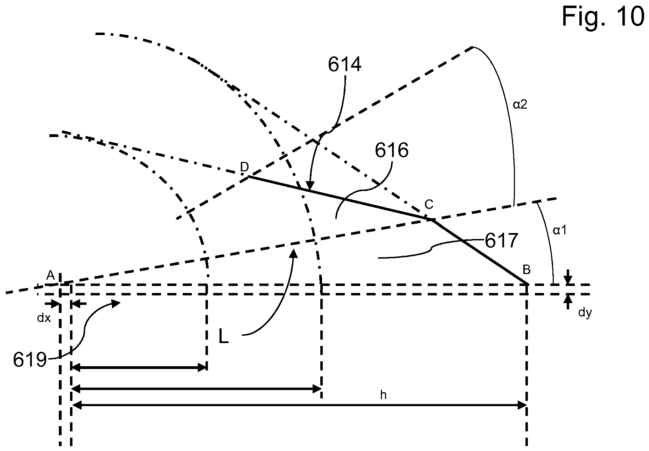

La figure 10 illustre un quatrième exemple de conception de la géométrie d'une zone d'homogénéisation 614 ou 634. Cette conception permet également d'optimiser la compacité des zones d'homogénéisation et de garantir une même section transversale dans les différents canaux d'homogénéisation et branches des canaux d'homogénéisation. Dans cet exemple, une ligne A-B passe par les extrémités des canaux d'écoulement 618. Une ligne A-C est tracée, sécante à la ligne A-B au point A. Les embranchements sont ménagés le long de la ligne A-C. La zone d'homogénéisation 617 est donc positionnée entre les lignes A-B et A-C, et plus précisément délimitée par un triangle ABC. Dans cet exemple, une ligne A-D définit la jonction entre une zone d'injection (non illustrée) et la zone d'homogénéisation 616, cette ligne étant sécante à la ligne A-B au point A. La zone d'homogénéisation 616 est donc positionnée entre les lignes A-D et A-C, et plus précisément délimitée par un triangle ADC. De façon similaire, la zone d'homogénéisation 634 peut présenter une conception similaire, non illustrée.

La valeur h définit la largeur totale des canaux d'écoulement de la zone 619. Le ratio entre la largeur des canaux de la zone 617 et celui des canaux de la zone 619 vaut ε1 (ε1 sera avantageusement compris entre 0,95 et 1,25 si les canaux n'ont pas une largeur rigoureusement égale). Le ratio entre le pas des canaux de la zone 616 et celui des canaux de la zone 617 vaut ε2 (ε2 sera avantageusement compris entre 0,95 et 1,25 si les canaux n'ont pas une largeur rigoureusement égale). Dans l'exemple illustré, un décalage de dy est ménagé entre la ligne A-B (matérialisant l'extrémité des canaux d'homogénéisation de la zone 617) et les canaux de la zone 619. Le point A est également ici décalé latéralement d'une distance dx, afin de faciliter le tracé des changements d'angle des canaux des zones 616 et 617 proches du point A.

Le segment BC peut être tracé à partir du point B, en traçant la tangente au cercle de centre A et de diamètre h/2 x ε1 + dx (par exemple ici ε1 =1,1). Le point C est obtenu en choisissant une valeur d'angle α1 entre AB et AC (ici 10°). Le segment CD est tracé à partir de C, et en traçant la tangente au cercle de centre A et de diamètre h/4 x ε1 x ε2 + dx (par exemple ici ε2=1,1). Le point D est obtenu en choisissant une valeur d'angle α2 entre AC et AD (ici 20°).

Les grandeurs dx, dy, ε1, ε2, α1, α2 sont des paramètres qui permettent d'ajuster la géométrie de la zone d'homogénéisation 614 afin d'obtenir un compromis entre les critères suivants :
- Surface du quadrilatère ABCD ;
- Pertes de charges dans la zone d'homogénéisation 614 ;
- Ecart par rapport au débit moyen dans chaque canal de la zone 619 ;
- Coïncidence éventuelle avec une zone d'homogénéisation située en vis-à-vis, sur l'autre tôle de la plaque bipolaire ;
- Cohérence avec les dimensions des collecteurs d'échappement des autres fluides circulant dans la plaque.

Les valeurs pourront avantageusement être les suivantes :
- dx=0
- dy=0
- ε1=1
- ε2=1
- α1+α2=30°

De façon générale, on respectera avantageusement les règles suivantes :
- 0<dx<h/10
- 0<dy<5 mm
- 10°<α1+α2<60°

La figure 9 est une vue schématique partielle de dessus d'une tôle 61 d'un autre exemple de mise en oeuvre d'une plaque bipolaire 5 selon l'invention. Dans cet exemple, la zone d'homogénéisation est scindée en trois zones d'homogénéisation : une zone 616, une zone 641 et une zone 617. La zone d'homogénéisation 616 forme un premier tronçon et comporte des canaux d'homogénéisation dans lesquels débouchent les orifices d'injection 512. La zone d'homogénéisation 617 forme un deuxième tronçon comportant des branches débouchant dans des canaux d'écoulement 618. La zone d'homogénéisation 641 forme un troisième tronçon. La zone 641 forme un intermédiaire entre la zone d'homogénéisation 616 et la zone d'homogénéisation 617. Chaque canal d'homogénéisation de la zone 616 se scinde en plusieurs branches dans la zone 641. Chaque branche de la zone 641 se scinde encore en plusieurs branches dans la zone 617. La ligne L1 illustrée est située au niveau des embranchements entre les canaux d'homogénéisation de la zone 616 et les branches de la zone 641. La ligne L2 illustrée est située au niveau des embranchements entre les branches de la zone 641 et les branches de la zone 617. Avec une telle configuration, on peut accroître l'angle entre les canaux d'homogénéisation de la zone 616 et les canaux d'écoulement 618, de façon à rendre la zone d'homogénéisation 614 encore plus compacte. Au niveau de chaque embranchement, il y a dans cet exemple une scission en deux branches. Par ailleurs, chaque branche de la zone 617 débouche dans deux canaux d'écoulement 618.

L'invention a été décrite en référence à une injection d'un carburant de type dihydrogène dans une pile à combustible. L'invention s'applique bien en entendu également à l'injection d'autres types de carburants, par exemple du méthanol. L'invention a été décrite en référence à une injection d'un comburant tel que l'air. L'invention s'applique bien entendu également à l'injection d'autres types de comburants, par exemple de l'oxygène.

L'invention a été décrite en référence à un réacteur électrochimique de type pile à combustible à membrane échangeuse de protons. L'invention peut bien entendu également s'appliquer à d'autres types de réacteurs électrochimiques, par exemple un électrolyseur comprenant également un empilement de plaques bipolaires et de membranes échangeuse de protons.

L'invention a été décrite en référence à des exemples dans lesquels une face externe de la plaque bipolaire, comportant les canaux d'écoulement et les canaux d'homogénéisation, sont définies par le relief d'une tôle. Des canaux d'écoulement et des canaux d'homogénéisation tels que décrits peuvent également être réalisés dans un composant monobloc définissant les deux faces externes de la plaque bipolaire.

## Revendications

1. Plaque bipolaire (5) pour réacteur électrochimique comprenant des première (61) et deuxième faces externes conductrices opposées, dans laquelle
- des premier canaux d'écoulement (618) sont ménagés sur la première face externe et s'étendent selon une même direction;
- des premiers orifices d'injection (512) sont ménagés dans la première face externe;
- une première zone d'homogénéisation (614) ménagée sur la première face externe et comportant des canaux d'homogénéisation où les canaux d'homogénéisation :
- relient chacun un premier orifice d'injection (512) à plusieurs desdits premiers canaux d'écoulement (618),
- se subdivisent chacun en plusieurs branches en partant d'un premier orifice d'injection jusqu'à un desdits canaux d'écoulement, la plaque bipolaire étant **caractérisée en ce que** les canaux d'homogénéisation:
- comportent chacun un premier tronçon (616) dans lequel débouche un desdits premiers orifices d'injection (512) et un deuxième tronçon (617) comportant plusieurs branches débouchant dans des premiers canaux d'écoulement (618), les branches dans le deuxième tronçon formant un angle d'au moins 20° par rapport à la direction des premiers canaux d'écoulement (618) et les canaux d'homogénéisation dans le premier tronçon forment un angle d'au moins 20° par rapport à la direction des branches dans le deuxième tronçon et d'au moins 40° par rapport à la direction des premiers canaux d'écoulement (618).

2. Plaque bipolaire (5) selon la revendication 1, dans laquelle chaque branche du deuxième tronçon (617) débouche dans plusieurs des premiers canaux d'écoulement (618).

3. Plaque bipolaire (5) selon la revendication 1 ou 2, dans laquelle la section transversale de chacun desdits canaux d'homogénéisation dans le premier tronçon (616) est identique à la section transversale de chacun desdits premiers canaux d'écoulement (618).

4. Plaque bipolaire selon l'une quelconque des revendications précédentes, dans laquelle le rapport entre la section transversale des canaux d'homogénéisation dans le premier tronçon et la section transversale des branches du deuxième tronçon est compris entre 0,95 et 1,25, et préférentiellement la section transversale de chacun desdits canaux d'homogénéisation est identique dans le premier tronçon et dans chaque branche du deuxième tronçon.

5. Plaque bipolaire selon l'une quelconque des revendications précédentes, dans lequel chaque branche du deuxième tronçon débouche dans un unique canal d'homogénéisation du premier tronçon.

6. Plaque bipolaire (5) selon l'une quelconque des revendications précédentes, dans laquelle des canaux d'écoulement de liquide de refroidissement sont ménagés entre les première et deuxième faces externes (51,52) conductrices.

7. Plaque bipolaire (5) selon l'une quelconque des revendications précédentes, dans laquelle chacun desdits canaux d'homogénéisation se subdivise en plusieurs branches au niveau d'au moins un embranchement (L), un canal d'homogénéisation se subdivisant en au plus trois branches au niveau d'un embranchement.

8. Plaque bipolaire selon la revendication 7, dans laquelle chacun desdits embranchements est disposé dans son canal d'homogénéisation à une distance d'un premier orifice d'injection (512) comprise entre 0,3 * Lch et 0,7 * Lch, avec Lch la longueur du canal d'homogénéisation dans lequel est situé l'embranchement.

9. Plaque bipolaire selon l'une quelconque des revendications précédentes, traversé par un collecteur d'écoulement, lesdits premiers orifices d'injection (512) mettant en communication ledit collecteur d'écoulement (596) avec lesdits canaux d'homogénéisation de la première zone d'homogénéisation (614).

10. Plaque bipolaire selon l'une quelconque des revendications précédentes, incluant des première et deuxième tôles conductrices solidarisées (61, 62), la première face externe conductrice étant ménagée dans la première tôle conductrice, la deuxième face externe conductrice étant ménagée dans la deuxième tôle conductrice.

11. Plaque bipolaire selon l'une quelconque des revendications précédentes, comportant :
- des deuxièmes canaux d'écoulement ménagés sur la deuxième face externe conductrice;
- des deuxièmes orifices d'injection ménagés dans la deuxième face externe, les premier et deuxième orifices étant disposés de part et d'autre d'un plan (P) perpendiculaire à la plaque bipolaire et incluant ladite direction des premiers canaux d'écoulement;
- une deuxième zone d'homogénéisation superposée à la première zone d'homogénéisation et ménagée sur la deuxième face externe et comportant des canaux d'homogénéisation reliant les deuxièmes orifices auxdits deuxièmes canaux d'écoulement.

12. Plaque bipolaire (5) selon l'une quelconque des revendications précédentes, comprenant :
- des troisièmes orifices d'injection ménagés dans la première face externe conductrice;
- une troisième zone d'homogénéisation (634) ménagée sur la première face externe, les première et troisième zones d'homogénéisation étant positionnées au niveau d'extrémités opposées des premiers canaux d'écoulement (618), la troisième zone d'homogénéisation étant le symétrique de la première zone d'homogénéisation (614) par rapport à un axe perpendiculaire à la plaque bipolaire.

13. Plaque bipolaire (5) selon l'une quelconque des revendications 1 à 11, comprenant :
- des troisièmes orifices d'injection ménagés dans la première face externe conductrice;
- une troisième zone d'homogénéisation (634) ménagée sur la première face externe, la troisième zone d'homogénéisation comportant des canaux d'homogénéisation reliant chacun un troisième orifice d'injection à plusieurs desdits premiers canaux d'écoulement (618), ces canaux d'homogénéisation se subdivisant chacun en plusieurs branches en partant d'un troisième orifice d'injection jusqu'à un desdits canaux d'écoulement ;
les première et troisième zones d'homogénéisation étant positionnées au niveau d'extrémités opposées des premiers canaux d'écoulement (618), le canal d'homogénéisation de la première zone d'homogénéisation et le canal d'homogénéisation de la troisième zone d'homogénéisation débouchant dans un même canal d'écoulement sont disposés de côtés opposés d'un plan perpendiculaire à la plaque bipolaire et s'étendant selon la direction de ce canal d'écoulement.

14. Plaque bipolaire selon la revendication 13, dans laquelle les canaux d'homogénéisation de la troisième zone d'homogénéisation comportent chacun un premier tronçon dans lequel débouche un desdits troisièmes orifices d'injection et un deuxième tronçon comportant plusieurs branches débouchant dans des premiers canaux d'écoulement (618), les branches dans le deuxième tronçon formant un angle d'au moins 20° par rapport à la direction des premiers canaux d'écoulement (618) et les canaux d'homogénéisation dans le premier tronçon forment un angle d'au moins 20° par rapport à la direction des branches dans le deuxième tronçon et d'au moins 40° par rapport à la direction des premiers canaux d'écoulement (618).

15. Réacteur électrochimique (4), comprenant :
- deux plaques bipolaires (5) selon la revendication 11;
- un assemblage membrane-électrodes (110) interposé entre les deux plaques bipolaires (5), l'assemblage membrane-électrodes comportant une membrane échangeuse de protons (110), une première électrode sur une première face de la membrane et recouvrant lesdits premiers canaux d'écoulement (618) d'une desdites plaques bipolaires (5), une deuxième électrode sur une deuxième face de la membrane (110) et recouvrant lesdits deuxième canaux d'écoulement de l'autre desdites plaques bipolaires, l'assemblage membrane-électrodes (113) étant dépourvu d'électrodes à l'aplomb des zones d'homogénéisation (614) des plaques bipolaires (5).

## Patentansprüche

1. Bipolare Platte (5) für einen elektrochemischen Reaktor, welche eine erste (61) und eine zweite leitfähige Außenseite, die einander gegenüberliegen, umfasst, wobei
- erste Strömungskanäle (618) auf der ersten Außenseite ausgebildet sind und sich in derselben Richtung erstrecken;
- erste Einspritzöffnungen (512) in der ersten Außenseite ausgebildet sind;
- ein erster Homogenisierungsbereich (614) auf der ersten Außenseite ausgebildet ist und Homogenisierungskanäle aufweist, wobei die Homogenisierungskanäle:
- jeweils eine erste Einspritzöffnung (512) mit mehreren der ersten Strömungskanäle (618) verbinden,
- sich jeweils, ausgehend von einer ersten Einspritzöffnung, in mehrere Zweige bis zu einem der Strömungskanäle aufteilen, wobei die bipolare Platte **dadurch gekennzeichnet ist, dass** die Homogenisierungskanäle:
- jeweils einen ersten Abschnitt (616), in welchen eine der ersten Einspritzöffnungen (512) mündet, und einen zweiten Abschnitt (617), der mehrere Zweige aufweist, die in erste Strömungskanäle (618) münden, aufweisen, wobei die Zweige in dem zweiten Abschnitt einen Winkel von mindestens 20° bezüglich der Richtung der ersten Strömungskanäle (618) bilden und die Homogenisierungskanäle in dem ersten Abschnitt einen Winkel von mindestens 20° bezüglich der Richtung der Zweige in dem zweiten Abschnitt und von mindestens 40° bezüglich der Richtung der ersten Strömungskanäle (618) bilden.

2. Bipolare Platte (5) nach Anspruch 1, wobei jeder Zweig des zweiten Abschnitts (617) in mehrere der ersten Strömungskanäle (618) mündet.

3. Bipolare Platte (5) nach Anspruch 1 oder 2, wobei der Querschnitt jedes der Homogenisierungskanäle im ersten Abschnitt (616) mit dem Querschnitt jedes der ersten Strömungskanäle (618) identisch ist.

4. Bipolare Platte nach einem der vorhergehenden Ansprüche, wobei das Verhältnis zwischen dem Querschnitt der Homogenisierungskanäle im ersten Abschnitt und dem Querschnitt der Zweige des zweiten Abschnitts zwischen 0,95 und 1,25 liegt und vorzugsweise der Querschnitt jedes der Homogenisierungskanäle im ersten Abschnitt und in jedem Zweig des zweiten Abschnitts identisch ist.

5. Bipolare Platte nach einem der vorhergehenden Ansprüche, wobei jeder Zweig des zweiten Abschnitts in einen einzigen Homogenisierungskanal des ersten Abschnitts mündet.

6. Bipolare Platte (5) nach einem der vorhergehenden Ansprüche, wobei Strömungskanäle für Kühlflüssigkeit zwischen der ersten und der zweiten leitfähigen Außenseite (51, 52) ausgebildet sind.

7. Bipolare Platte (5) nach einem der vorhergehenden Ansprüche, wobei jeder der Homogenisierungskanäle sich an mindestens einer Verzweigung (L) in mehrere Zweige aufteilt, wobei ein Homogenisierungskanal sich an einer Verzweigung in höchstens drei Zweige aufteilt.

8. Bipolare Platte nach Anspruch 7, wobei jede der Verzweigungen in ihrem Homogenisierungskanal in einem Abstand von einer ersten Einspritzöffnung (512) angeordnet ist, der zwischen 0,3 * Lch und 0,7 * Lch beträgt, wobei Lch die Länge des Homogenisierungskanals ist, in dem sich die Verzweigung befindet.

9. Bipolare Platte nach einem der vorhergehenden Ansprüche, die von einem Strömungssammler durchquert wird, wobei die ersten Einspritzöffnungen (512) eine Verbindung des Strömungssammlers (596) mit den Homogenisierungskanälen des ersten Homogenisierungsbereichs (614) herstellen.

10. Bipolare Platte nach einem der vorhergehenden Ansprüche, welche ein erstes und ein zweites leitfähiges Blech (61, 62), die fest miteinander verbunden sind, aufweist, wobei die erste leitfähige Außenseite in dem ersten leitfähigen Blech ausgebildet ist und die zweite leitfähige Außenseite in dem zweiten leitfähigen Blech ausgebildet ist.

11. Bipolare Platte nach einem der vorhergehenden Ansprüche, welche aufweist:
- zweite Strömungskanäle, die in der zweiten leitfähigen Außenseite ausgebildet sind;
- zweite Einspritzöffnungen, die in der zweiten Außenseite ausgebildet sind, wobei die erste und die zweite Öffnung beiderseits einer Ebene (P) angeordnet sind, die zu der bipolaren Platte senkrecht ist und die Richtung der ersten Strömungskanäle enthält;
- einen zweiten Homogenisierungsbereich, der dem ersten Homogenisierungsbereich überlagert ist und auf der zweiten Außenseite ausgebildet ist und Homogenisierungskanäle aufweist, welche die zweiten Öffnungen mit den zweiten Strömungskanälen verbinden.

12. Bipolare Platte (5) nach einem der vorhergehenden Ansprüche, welche aufweist:
- dritte Einspritzöffnungen, die in der ersten leitfähigen Außenseite ausgebildet sind;
- einen dritten Homogenisierungsbereich (634), der auf der ersten Außenseite ausgebildet ist, wobei der erste und der dritte Homogenisierungsbereich an gegenüberliegenden Enden der ersten Strömungskanäle (618) positioniert sind, wobei der dritte Homogenisierungsbereich das symmetrische Gegenstück des ersten Homogenisierungsbereichs (614) bezüglich einer zu der bipolaren Platte senkrechten Achse ist.

13. Bipolare Platte (5) nach einem der Ansprüche 1 bis 11, welche umfasst:
- dritte Einspritzöffnungen, die in der ersten leitfähigen Außenseite ausgebildet sind;
- einen dritten Homogenisierungsbereich (634), der auf der ersten Außenseite ausgebildet ist, wobei der dritte Homogenisierungsbereich Homogenisierungskanäle aufweist, die jeweils eine dritte Einspritzöffnung mit mehreren der ersten Strömungskanäle (618) verbinden, wobei diese Homogenisierungskanäle sich jeweils, ausgehend von einer dritten Einspritzöffnung, in mehrere Zweige bis zu einem der Strömungskanäle aufteilen;
wobei der erste und der dritte Homogenisierungsbereich an gegenüberliegenden Enden der ersten Strömungskanäle (618) positioniert sind, wobei der Homogenisierungskanal des ersten Homogenisierungsbereichs und der Homogenisierungskanal des dritten Homogenisierungsbereichs, die in denselben Strömungskanal münden, auf entgegengesetzten Seiten einer zu der bipolaren Platte senkrechten Ebene angeordnet sind und sich in der Richtung dieses Strömungskanals erstrecken.

14. Bipolare Platte nach Anspruch 13, wobei die Homogenisierungskanäle des dritten Homogenisierungsbereichs jeweils einen ersten Abschnitt, in welchen eine der dritten Einspritzöffnungen mündet, und einen zweiten Abschnitt, der mehrere Zweige aufweist, die in erste Strömungskanäle (618) münden, aufweisen, wobei die Zweige in dem zweiten Abschnitt einen Winkel von mindestens 20° bezüglich der Richtung der ersten Strömungskanäle (618) bilden und die Homogenisierungskanäle in dem ersten Abschnitt einen Winkel von mindestens 20° bezüglich der Richtung der Zweige in dem zweiten Abschnitt und von mindestens 40° bezüglich der Richtung der ersten Strömungskanäle (618) bilden.

15. Elektrochemischer Reaktor (4), welcher umfasst:
- zwei bipolare Platten (5) nach Anspruch 11;
- eine Membran-Elektroden-Anordnung (110), die zwischen den zwei bipolaren Platten (5) angeordnet ist, wobei die Membran-Elektroden-Anordnung eine Protonenaustauschmembran (110), eine erste Elektrode auf einer ersten Seite der Membran, welche die ersten Strömungskanäle (618) einer der bipolaren Platten (5) bedeckt, und eine zweite Elektrode auf einer zweiten Seite der Membran (110), welche die zweiten Strömungskanäle der anderen der bipolaren Platten bedeckt, aufweist, wobei die Membran-Elektroden-Anordnung (113) in lotrechter Richtung zu den Homogenisierungsbereichen (614) der bipolaren Platten (5) nicht mit Elektroden versehen ist.

## Claims

1. Bipolar plate (5) for an electrochemical reactor including first (61) and second opposing outer conductive faces, in which
- first flow channels (618) are formed on the first outer face, extending in the same direction;
- first injection orifices (512) are formed in the first outer face;
- a first homogenization zone (614) formed on the first outer face and including homogenization channels that:
- each connect a first injection orifice (512) to a plurality of said first flow channels (618),
- each sub-divide into a plurality of branches extending from a first injection orifice to one of said flow channels, the bipolar plate being **characterized in that** the homogenization channels:
- each include a first section (616) into which one of said first injection orifices (512) discharges and a second section (617) including a plurality of branches discharging into the first flow channels (618), the branches in the second section being at an angle of at least 20° relative to the direction of the first flow channels (618) and the homogenization channels in the first section are at an angle of at least 20° relative to the direction of the branches in the second section and at least 40° relative to the direction of the first flow channels (618).

2. Bipolar plate (5) according to Claim 1, in which each branch of the second section (617) discharges into a plurality of the first flow channels (618).

3. Bipolar plate (5) according to Claim 1 or 2, in which the cross section of each of said homogenization channels in the first section (616) is identical to the cross section of each of said first flow channels (618) .

4. Bipolar plate according to any one of the preceding claims, in which the ratio between the cross section of the homogenization channels in the first section and the cross section of the branches of the second section is between 0.95 and 1.25 inclusive and the cross section of each of said homogenization channels is preferably identical in the first section and in each branch of the second section.

5. Bipolar plate according to any one of the preceding claims, in which each branch of the second section discharges into a single homogenization channel of the first section.

6. Bipolar plate (5) according to any one of the preceding claims, in which there are cooling liquid flow channels between the first and second outer conductive faces (51,52).

7. Bipolar plate (5) according to any one of the preceding claims, in which each of said homogenization channels is divided into a plurality of branches at the level of at least one junction (L), a homogenization channel being divided into at most three branches at the level of a junction.

8. Bipolar plate according to Claim 7, in which each of said junctions is disposed in its homogenization channel at a distance from a first injection orifice (512) between 0.3 * Lch and 0.7 * Lch inclusive, where Lch is the length of the homogenization channel in which the junction is situated.

9. Bipolar plate according to any one of the preceding claims, through which a flow manifold passes, said first injection orifices (512) establishing communication between said flow manifold (596) and said homogenization channels of the first homogenization zone (614).

10. Bipolar plate according to any one of the preceding claims, including first and second conductive sheets (61, 62) fastened together, the first outer conductive face being on the first conductive sheet, the second outer conductive face being on the second conductive sheet.

11. Bipolar plate according to any one of the preceding claims, including:
- second flow channels on the second outer conductive face;
- second injection orifices in the second outer face, the first and second orifices being disposed on opposite sides of a plane (P) perpendicular to the bipolar plate and including said direction of the first flow channels;
- a second homogenization zone on the second outer face, said second homogenization zone being superposed on the first homogenization zone and comprising homogenization channels connecting the second orifices to said second flow channels.

12. Bipolar plate (5) according to any one of the preceding claims, including:
- third injection orifices in the first outer conductive face;
- a third homogenization zone (634) on the first outer face, the first and third homogenization zones being at opposite ends of the first flow channels (618), the third homogenization zone being symmetrical to the first homogenization zone (614) with respect to an axis perpendicular to the bipolar plate.

13. Bipolar plate (5) according to any one of Claims 1 to 11, including:
- third injection orifices in the first outer conductive face;
- a third homogenization zone (634) on the first outer face, the third homogenization zone including homogenization channels each connecting a third injection orifice to a plurality of said first flow channels (618), these homogenization channels each being divided into a plurality of branches extending from a third injection orifice to one of said flow channels;
the first and third homogenization zones being at opposite ends of the first flow channels (618), the homogenization channel of the first homogenization zone and the homogenization channel of the third homogenization zone discharging into the same flow channel are on opposite sides of a plane perpendicular to the bipolar plate and extending in the direction of that flow channel.

14. Bipolar plate according to Claim 13, in which the homogenization channels of the third homogenization zone each include a first section into which one of said third injection orifices discharges and a second section including a plurality of branches discharging into first flow channels (618), the branches in the second section being at an angle of at least 20° relative to the direction of the first flow channels (618) and the homogenization channels in the first section being at an angle of at least 20° to the direction of the branches in the second section and at least 40° relative to the direction of the first flow channels (618).

15. Electrochemical reactor (4) including:
- two bipolar plates (5) according to Claim 11;
- a membrane-electrodes assembly (110) disposed between the two bipolar plates (5), the membrane-electrodes assembly including a proton exchange membrane (110), a first electrode on a first face of the membrane and covering said first flow channels (618) of one of said bipolar plates (5), a second electrode on a second face of the membrane (110) and covering said second flow channels of the other of said bipolar plates, the membrane-electrodes assembly (113) having no electrodes in vertical alignment with the homogenization zones (614) of the bipolar plates (5).
